# EUROPÄISCHE PATENTSCHRIFT

(11) **EP 0 802 166 B1**
(45) Veröffentlichungstag und Bekanntmachung des Hinweises auf die Patenterteilung: **24.10.2001**
(21) Anmeldenummer: 97890069.4
(22) Anmeldetag: 16.04.1997
(51) Int. Cl.: C02F 3/30, C02F 3/12

(54) **Verfahren zur Behandlung und Reinigung industrieller Abwässer**
Process for treating and purifying industrial waste waters
Procédé de traitement et purification des eaux usées industrielles

(30) Priorität: 19.04.1996 AT 72196
(43) Veröffentlichungstag der Anmeldung: 22.10.1997
(73) Patentinhaber: Dynamit Nobel Wien Gesellschaft mbH, 1010 Wien (AT)
(72) Erfinder: Steiner, Josef, Dipl. Ing., 8813 St. Lambrecht (AT)
(74) Vertreter: Patentanwälte BARGER, PISO & PARTNER

(56) Entgegenhaltungen:
- DE-A- 3 310 572
- DE-C- 4 213 846
- US-A- 4 009 099
- US-A- 4 537 682

## Beschreibung

Die Erfindung betrifft ein Verfahren zur Behandlung und Reinigung industrieller Abwässer.

Als Literatur zum Stand der Technik sei dabei genannt:

Steiner J.: Biologische Reinigung mit integrierter Denitrifikationsstufe eines Abwassers aus der Sprengmittelindustrie im Labor und in einer Pilotanlage. Diplomarbeit, Technische Universität Graz (1994), (noch gesperrt): Hier sind physikalisch-chemische Verfahren zur Nitratentfernung wie Umkehrosmose und Ionenaustauschverfahren und Ihre auftretenden Probleme beschrieben. Die Ionenaustauschverfahren sind bei Sulfat als Begleition nicht anwendbar.

Rohmann u., Sontheimer H.: Nitrat im Grundwasser. DVGW-Forschungsstelle am Engler-Bunte-Institut der Universität Karlsruhe (1985);

Braun R.J..: Prozeßtechnische Aussagen zum praktischen Betriebsverhalten einer biologischen Denitrifikations- und Pilotanlage. Diplomarbeit, Technische Universität Graz (1988) ;

Höll W., Kiehling B.: Regeneration eines Ionenaustauschermischbettes mit CO₂ zur Teilentsalzung von Trinkwasser. Vom Wasser. 59 (1982) 207-220.

Für kommunale Anlagen wird meist eine biologische Denitrifikation in Kombination mit Nitrifikation verwendet (z.B. Bayer-Turmbiologie) beschrieben in:

Kayser R.: Ein Ansatz zur Bemessung einstufiger Belebungsanlagen für Nitrifikation -Denitrifikation. GWF-Wasser/Abwasser. 124 (1982) 419-427.

Als Patentliteratur kommt in Betracht:

Die EP 0 620 191 A1 beschreibt ein Verfahren, das in einem Belebtschlammbecken mit anschließendem Nachklärbecken und teilweiser Rückführung der im Nachklärbecken abgesetzten Biomasse. Diese Biomasse wird zuerst mit dem Rohabwasser im unteren Beckenbereich denitrifiziert und sodann im oberen Beckenbereich unter punktueller Sauerstoffzufuhr nitrifiziert.

Die DE 34 27 448 A1 beschreibt, so wie die DE 34 31 568 A1 und die DE 33 10 572 A1 das Vorsehen aerober Vorstufen zur Denitrifikation, wobei verschiedene Zusätze wie Überschußschlamm, Zuckerlösungen oder Flotationsschlamm vorgesehen sind. Die Herkunft und somit die Zusammensetzung des zu reinigenden Abwasssers wird dabei nicht geoffenbart, nach den beschriebenen Verfahren scheint es sich im wesentlichen um Oberflächenwässer, gegebenenfalls mit Abwässern aus dem Wohnbereich gemischt, zu handeln.

Industrielle Abwässer weisen im Gegensatz zu Oberflächenabwässern, wie sie von Dächern, Straßen, Wegen, Parkplätzen u.dgl. anfallen und im Gegensatz zu Abwässern aus dem privaten bzw. dem Wohnbereich vielfach Zusammensetzungen auf, die einen biologischen Abbau der Verunreinigungen wesentlich erschweren oder sogar unmöglich machen.

Es seien als Beispiel für viele die folgenden Kennwerte von Abwässerströmen genannt:

| Abwasserstrom 1: | |
|---|---|
| pH-Wert [-] | 0,1 bis 2,0 (unneutralisiert) |
| CSB [mg/l] | 2000 bis 3500 |
| Ammonium [mg/l] | 0 bis 2,5 |
| (NH4-N [mg/l] | 0 bis 1,9) |
| Nitrit [mg/l] | 15 bis 30 |
| (NO2-N [mg/l] | 5 bis 10) |
| Nitrat [mg/l] | 15000 bis 30000 |
| (N03-N [mg/l] | 3400 bis 6800) |
| Sulfat [mg/l] | 1000 bis 1600 |
| Chlorid [mg/l] | 50 bis 150 |
| Natrium [mg/l] | 5000 bis 7500 |
| | |

| Abwasserstrom 2: | |
|---|---|
| | |
| pH-Wert [-] | 7,0 bis 7,5 |
| CSB [mg/l] | < 100 |
| Ammonium [mg/l] | 150 bis 230 |
| (NH4-N [mg/l] | 116 bis 179) |
| Nitrit [mg/l] | 2 bis 10 |
| (NO2-N [mg/l] | 0,6 bis 3,0) |
| Nitrat [mg/l] | 620 bis 1250 |
| (NO3-N [mg/l] | 140 bis 280) |

Man erkennt aus diesen Meßwerten, daß einerseits herkömmliche Reinigungsverfahren hier nicht anwendbar sind, daß aber anderseits derartig zusammengesetzte Abwässer auch in nur kleinen täglich anfallenden Mengen nicht unbehandelt in die Umwelt geleitet werden dürfen.

Versuche, die hohe Nitrit- und Nitratbelastung anoxisch in einem Tropfkörper zu reduzieren, wobei Methanol als Kohlenstoffquelle eingesetzt wurde, scheiterten am Vorhandensein von Inhibitoren im Abwasser, vermutlich handelt es sich dabei um aliphatische und aromatische Nitroverbindungen.

Um dennoch zu einer Reduzierung des Stickstoffgehaltes zu kommen, schlägt die Erfindung vor, die die Denitrifikation störenden Inhibitoren in einer aeroben Vorreinigungsstufe mikrobiell zu zerlegen und abzubauen, wobei zuerst der pH-Wert des Abwassers durch Zugabe basischer Reagenzien gehoben wird, bevorzugt auf 5,5 - 7, und wobei die Temperatur des Zulaufes zur aeroben Vorreinigungsstufe auf einen für die aerobe Behandlung günstigen Wert, bevorzugt 20°C bis 30°C, gehoben wird.

Im kontinuierlichen Betrieb wird dabei zum Anheben des pH-Wertes der alkalische Ablauf des der aeroben Vorreinigungsstufe nachfolgenden anoxischen Denitrifikators verwendet, der üblicherweise einen pH-Wert von etwa 9,0 aufweist. Es kommt dabei zu einer wesentlichen Verdünnung des Abwassers. Da der Denitrifikationsstufe (bevorzugt ein Tropfkörper) Methanol im Überschuß zugesetzt wird, wird dieser Überschuß durch die Rückverdünnung als Cosubstrat in der Vorreinigungsstufe eingesetzt.

Da Methanol aerob leichter abbaubar ist als der Kohlenstoff im vorkonditionierte Zulauf zur aeroben Vorreinigung, bewirkt die Methanolzufuhr eine Unterstützung bei der Ausbildung der Biomasse in der Vorreinigung und trägt so zur Betriebsstabilität bei.

Die optimale Prozeßtemperatur liegt sowohl in der aeroben Vorreinigungsstufe als auch in der anoxischen Denitrifikation bei 20°C bis 30°C, so daß, wie erwähnt, ein Erwärmen des zulaufenden Abwassers notwendig ist. Durch die Verwendung des Ablaufes der Denitrifikationsstufe kann dabei nicht nur der Einsatz von pH-Wert-steigernden Reagenzien und von Frischwasser wesentlich reduziert oder gänzlich vermieden werden, sondern es kann auch die zur Erwärmung benötigte Energie reduziert werden. Dazu kommt noch, daß, bevorzugt durch die Verwendung von Wärmetauschern, die bei der Denitrifizierung frei werdende Wärme zur Erwärmung des vorkonditionierten Abwassers verwendet wird, wodurch die Energiebilanz weiter verbessert wird.

Als Reaktor für die Durchführung der aeroben Vorreinigungsstufe hat sich besonders ein Reaktor bewährt, der eine Kombination von Wirbelbettreaktor und Belebtschlammreaktor darstellt. Dabei werden Blähton-Kügelchen oder Glasschaumpellets mit einem Durchmesser zwischen 4 mm und 8 mm verwendet, wobei die Blähton-Kügelchen bzw. Glasschaumpellets als Trägermaterial für die Mikroorganismen, die den Abbau vornehmen, dienen. Es kann durch diese Maßnahme nicht nur der Betrieb des Reaktors auf wirtschaftliche Weise durchgeführt werden, sondern es wird bei den angegebenen Abwasserzusammensetzungen gleichzeitig eine günstige Wahlmöglichkeit hinsichtlich der Betriebsweise bezüglich der Biomasse-Rückführung erreicht.

Diese Wahlmöglichkeit ist wünschenswert, da mit Biomasse-Rückführung allein bei den vorliegenden Betriebsbedingungen nicht gearbeitet werden kann, da der Biomassegehalt zu gering ist, sodaß kein ausreichender Bewuchs erfolgt. In einem Wirbelbettreaktor sind die Aufwuchsträger derartigen mechanischen Anfechtungen ausgesetzt, daß sie sich wegen ihrer unzulänglichen mechanischen Stabilität langsam auflösen und den nachgeschalteten Tropfkörper der Denitrifikationsstufe verstopfen.

Als Lösung wird vorgeschlagen, in der Aufwuchsphase der Biomasse mehr Aufwuchskörper (Pellets bzw. Kügelchen) als an sich notwendig einzusetzen, nämlich bis zu 1/3 des Reaktorvolumens, und mit Biomasse-Rückführung zu fahren, bis sich der leicht abreibbare Teil der Aufwuchskörper im Absetzbecken (vor der Denitrifikationsstufe) abgesetzt hat. Wenn ein stabiler Betriebszustand erreicht ist, wird die Biomasse-Rückführung eingestellt und im kontinuierlichen Verfahren (Belebtschlammverfahren) gearbeitet.

Bei Bedarf (zu geringer Biomassegehalt, Sinken der Abbauleistung, geänderte Betriebsbedingungen) werden Aufwuchskörper nachgefüllt und der Betrieb erfolgt wieder mit Biomasse-Rückführung.

Der sich in der aeroben Vorreinigungsstufe durch die Stoffwechselprodukte der Mikroorganismen bildende Biomassenschlamm und der Abrieb der Aufwuchskörper wird in einem Zwischenklärbecken vor der Einleitung der vorgereinigten Abwässer in die anoxische Denitrifikationsstufe abgeschieden. Bei den eingangs angegebenen Abwasserzusammensetzungen führt die aerobe Vorreinigungsstufe zu sich gut abscheidendem Schlamm, so daß ein konventionelles Sedimentationsbecken ausreichend ist.

Es ist selbstverständlich bei Abwässern, die bei einer aeroben Vorreinigung zu schwer absetzenden Schlämmen führen möglich, Zwischenklärbecken zu verwenden, bei denen das Absetzen des Schlammes gefördert wird, sei es durch Prallbleche, durch Zentrifugation, durch Zugabe von Ausflockungsmitteln oder auch durch permanentes, kontinuierliches Abfiltern.

Auf die aerobe Vorreinigung und die Entfernung des sich dabei gebildeten Schlammes folgt die anoxische Denitrifikationsstufe, die nach der geschilderten Vorbehandlung der Abwässer ohne die eingangs genannten Störungen, wie sie beim direkten Denitrifikationsversuch auftreten, problemlos erfolgt.

In der Praxis hat sich für die Denitrifikationsstufe die Verwendung eines Tropfkörpers mit Glasschaumpellets als Trägermaterial für den mikrobiologischen Aufwuchs bewährt.

Zufolge der anoxischen Bedingungen sind die Mikroorganismen des Bewuchses gezwungen, ihren Sauerstoffbedarf durch Nitratzersetzung zu decken. Der dabei freiwerdende Stickstoff entweicht gasförmig, der für die Denitrifikation erforderliche Kohlenstoff wird bevorzugt in Form von Methanol (siehe weiter unten) zugegeben, wobei als Faustregel angegeben werden kann, daß bei der beschriebenen Anordnung und einer Eingangskonzentration von 7 g Nitrat pro Liter vorgereinigtem Abwasser ein Zusatz von 1 ml Methanol/g Nitrat erforderlich ist. Theoretisch ist zur Reduktion von 1 g Nitrat 1 TOC von 162 mg erforderlich, doch soll die Dosierung im Überschuß erfolgen.

Diese Dosierung führt zu einem ausreichenden Abbau des Nitrats, das im Ablauf in tatsächlichen Konzentrationen von unter 100 mg/l vorliegt. Die Nitritkonzentration liegt im Bereich der analytischen Nachweisgrenze; Ammoniom ist nur in geringen Konzentrationen von unter 1,0 mg NH4-N/1 feststellbar. Der Gehalt an organischem Kohlenstoff in der nicht abgesetzten Probe inklusive abgeschwemmter Biomasse beträgt 800 bis 1200 mg DOC/l.

Der Ablauf der Denitrifikationsstufe wird geteilt, ein Teil wird, wie weiter oben bereits beschrieben, der aeroben Vorreinigungsstufe zugeführt, der andere Teil weiterbehandelt. Durch die Rückführung eines Teiles des Durchflusses wird eine Erhöhung des Massenstromes erreicht, ohne daß es zu einer Anhebung der Schadstoffbelastung kommt, was die Verfahrensführung positiv beeinflußt.

Der Betrieb des Denitrifikators unter den beschriebenen Bedingungen wird durch ein erfindungsgemäßes Verfahren zum Reinigen der Aufwuchskörper, bevorzugt sind dies Glasschaumpellets, wesentlich erleichtert und stabilisiert.

Eine übliche Reinigung und Auflockerung der Pellets mit Luft oder Wasser im sehr großen Behälter ist nur schwer durchführbar. Es wären große Spülmengen dazu erforderlich, eine nennenswerte Bewegung zu erzielen. Dabei muß bedacht werden, daß der Zutritt von Luft für die im anoxischen Gefäß enthaltene Biomasse schädlich ist. Bei einem derartigen Verfahren müßte der Behälter (bei sektionalem Betrieb zumindest teilweise) stillgelegt werden, wobei die Wiederbelebung der Biomasse einen weiteren, großen Zeitverlust bedeutet.

Erfindungsgemäß werden diese Probleme dadurch vermieden, daß Teilmengen der Aufwuchskörper abgezogen, extern gereinigt und anschließend dem Denitrifikationsreaktor wieder zugeführt werden. Dabei werden die Pellets bevorzugt aus der stark belasteten, unteren Zone des Reaktors abgezogen und in die minderbelastete, obere Zone rückgeführt. Dies bewirkt eine langsame Bewegung der Pellets im Reaktor, den sie im Laufe der Zeit von oben nach unten durchwandern.

Um dieses Verfahren durchzuführen, ist der Reaktor erfindungsgemäß mit mehreren Pelletaustragstutzen versehen, durch die die Pellets im Zuge einer Spülung mit Reinwasser während des normalen Betriebes unter Ausnutzung des Injektorprinzipes ausgetragen werden. Es werden dabei immer nur kleine Anteile der im Reaktor befindlichen Pellets ausgetragen.

Die Pellets gelangen sodann samt dem sie austragenden Schwall an Reinwasser in einen Rückspülbehälter in dem sie mittels Strahlen aus gereinigtem Abwasser aufgelockert und gereinigt werden. Das Überwasser und der Schlamm (Biorasen) wird in deas Zwischenklärbecken eingebracht und bleibt so im Kreislauf. Dadurch wird die den anoxischen Tropfkörper durchströmende Flüßigkeitsmenge vorteilhaft erhöht, ohne daß es zu einer höheren biologischen Belastung kommt.

Die Reinigung wird solange durchgeführt, daß auf den Pellets bzw. in deren Poren noch genügen Mikrobiologie (ca. 1 %) verbleibt, um einen raschen Neuaufbau nach ihrer Rückführung in den Tropfkörper zu ermöglichen. Die Rückspülung der Pellets erfolgt mit Reinwasser in die minderbelastete Zone des Reaktors, was die den anoxischen Tropfkörper durchströmende Flüßigkeitsmenge vorteilhaft weiter erhöht.

Um den Restkohlenstoff der denitrifizierten Abwässer ebenfalls abzubauen, wird erfindungsgemäß eine aerobe Nachreinigungsstufe, bevorzugt wieder in Form eines Reaktors, der eine Kombination eines Wirbelbettreaktors und eines Belebtschlammreaktors ist, mit Blähtonkügelchen, gegebenenfalls auch mit Glasschaumpellets als Aufwuchskörper für die Mikroorganismen, eingesetzt. In dieser Reinigungsstufe wird der Restkohlenstoffgehalt, der hauptsächlich auf nicht vollständig umgesetztem Methanol beruht, aber auch aus mitgerissenen Bewuchsteilen des mikrobiellen Bewuchses der Denitrifikationsstufe besteht, abgebaut. Dieser Abbau bereitet keine Probleme.

Abschließend findet eine Nachklärung statt, um sicherzustellen, daß keine Schlammanteile od.dergl. in den Vorfluter ausgetragen werden, da dies zu einer unzuläßigen Belastung mit organischen Kohlenstoffverbindungen führen könnte. Bei den eingangs angegebenen Abwasserzusammensetzungen und den erläuterten Behandlungsschritten ist, wie bei der Zwischenklärung, ein Sedimentationsbecken ausreichend, doch kann vorsorglich oder bei Schlämmen mit geringer Ausfallneigung ein rückspülbares Sandfilter vorgesehen sein, um auch Schwebepartikel zuverläßig auszufiltern.

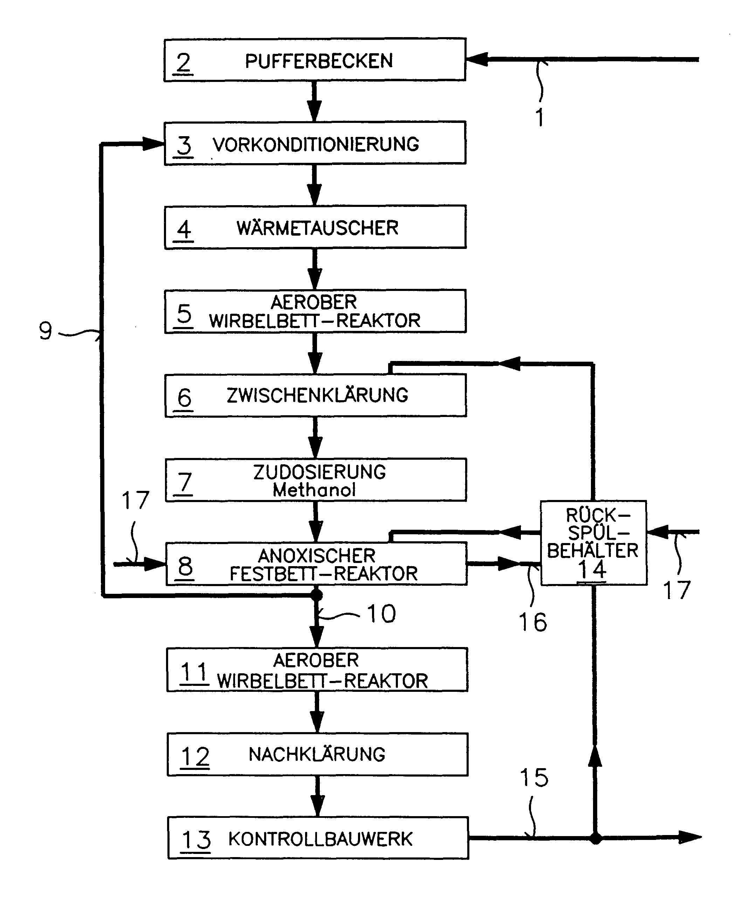

Der erfindungsgemäße Verfahrensablauf wird in der beiliegenden Zeichnung näher dargestellt. Dabei zeigt die einzige Figur das Verfahrensschema und das Schema der Pelletspülung.

Wie aus der Figur ersichtlich, werden die zu reinigenden Abwässer 1 einem Pufferbecken 2 zugeführt, das der Vergleichmäßigung nicht nur der eventuell schwankenden Konzentrationen der Verunreinigungen dient, sondern auch als Zwischen- und Pufferlager für den Tages- und Wochenausgleich der Anfallsmenge und bei eventuellen Produktionsstillständen und auch zum Abfangen von Spitzenwerten der Abwassermenge. Derartige Schwankungen können in der Industrie nicht nur aufgrund des Schichtbetriebes und der produktionsfreien Wochenenden, sondern auch durch Reparaturen und Wartungsarbeiten an den Produktionsstätten auftreten. Da die Abwasserbehandlung biologisch erfolgt, ist es notwendig, auch in Zeiten, in denen kein Abwasser anfällt, die Fauna am Leben zu erhalten, d.h. mit entsprechend belasteten Abwässern zu versorgen. Dies erfolgt passenderweise durch ein Pufferbecken, in dem etwa eine in einer durchschnittlichen Woche anfallende Menge der Abwässer 1 untergebracht werden kann.

Vom Pufferbecken 2 werden die Abwässer zur Vorkonditionierung 3 geleitet, dort findet vor allem die Anhebung des pH-Wertes durch Zugabe von pH-steigernden Reagenzien, beispielsweise Natronlauge oder entsprechender Mengen des rückgeführten alkalischen Abflusses aus dem anoxischen Denitrifikationsreaktor 8 statt.

Bei dieser Vorkonditionierung, die beispielsweise in einem kleinen Mischkessel oder einem erweiterten Rohrstück, gegebenenfalls unter Verwendung eines Rührwerkes, Mischers od.dgl. erfolgen kann, werden gegebenenfalls auch Nährstoffe für die Mikroorganismen folgenden Behandlung zugegeben. Es kann die Zugabe dieser Nährstoffe unter Umständen auch einzeln für die einzelnen Stufen bzw. Reaktoren erfolgen, besonders, wenn spezielle Mikroorganismen besonders unterstützt und gefördert werden sollen.

Es wird in der Folge zur Verbesserung der Leistungsfähigkeit des mikrobiellen Abbaues die Temperatur der vorkonditionierten Abwässer in einem Wärmetauscher 4 auf die optimale Temperatur gebracht, im geschilderten Beispiel liegt diese Temperatur, so wie im allgemeinen bei der überwiegenden Anzahl der biologischen Reinigungsanlagen, bei 20°C bis 30°C.

Vom Wärmetauscher 4 gelangt das vorkonditionierte und erwärmte Abwasser in eine aerobe Vorreinigungsstufe 5, bevorzugt ein kombinierter Wirbelbett-Belebtschlamm-Reaktor, wie er weiter oben beschrieben wurde.

In der Folge gelangt das nunmehr von den die Denitrifizierung inhibierenden Stoffen befreite vorgereinigte Abwasser in ein Zwischenklärbecken 6, in dem sich die in der Vorreinigungsstufe gebildete und mit dem vorbehandelten Abwasser mit abgezogene Biomasse absetzen kann. Der entsprechende Klärschlamm kann kontinuierlich oder von Zeit zu Zeit abgezogen werden, es können zur Verbesserung des Absetzens verschiedene Einbauten oder auch mechanische Vorrichtungen im Zwischenklärbecken vorgesehen sein. Wie bereits erwähnt, besteht selbstverständlich auch die Möglichkeit, Ausflockungsmittel od.dgl. zuzusetzen, dies muß nicht permanent geschehen, sondern kann auf besondere Betriebssituationen, beispielsweise das Anfahren oder das Auftreten von Spitzenbelastungen, beschränkt sein.

Vom Zwischenklärbecken 6 gelangt das vorbehandelte Abwasser nach Zugabe von Methanol oder einem anderen Kohlenstofflieferanten, beispielsweise Ethanol, Zucker, Glykol oder Acetat, für die Reduktion des Nitrates in einer Dosierstelle 7 in den anoxischen Denitrifikator 8. Dieser ist im geschilderten Beispiel ein Festbettreaktor, wobei bevorzugt Glasschaumpellets als Trägermaterial verwendet werden.

Die bevorzugte Verwendung von Methanol ist durch die Tatsache bedingt, daß in diesem Molekül keine Kohlenstoff-Kohlenstoff-Bindung vorliegt, wodurch der Kohlenstoff für die Mikroorganismen leicht zugänglich ist, was besonders beim Aufbau der Biomasse und bei kritischen Betriebszuständen vorteilhaft ist. Auch wenn, wie im vorliegenden Fall, das zu reinigende Abwasser mit Verbindungen befrachtet ist, die von den Mikroorganismen nur schwer zerlegt werden können, ist das Vorliegen von leicht zugänglichem Kohlenstoff vorteilhaft.

Mit dem anoxischen Festbettreaktor 8 verbunden ist ein Reinigungssystem 14 für die in ihm enthaltenen Pellets. Dieses System ist weiter oben beschrieben, hier sollen nur die wesentlichen Merkmale angeführt werden. Die Pellets werden bei 16 mittels Reinwassers 17 aus dem Reaktor 8 abgezogen und in einen Rückspülbehälter 14 eingebracht. Dort werden sie mit gereinigtem Abwasser 15 gereinigt, das Abwasser wird sodann zur Zwischenklärung 6 gepumpt, die gereinigten Pellets werden mittels Reinwassers 17 in den oberen Bereich des Reaktors 8 gespült.

Der Ablauf vom anoxischen Festbettreaktor 8 wird geteilt, ein Teilstrom 9 wird zur Vorkonditionierung 2 zurückgeführt, die Menge dieses Stromes richtet sich in erster Linie nach dem pH-Wert und der Menge des vom Pufferbeckens 2 zuströmenden Abwassers.

Der nicht für die Vorkonditionierung benötigte Rest des Ablaufes vom anoxischen Denitrifikator 8 wird als Teilstrom 10 einer aeroben Nachreinigung 11 zugeführt, die bevorzugt in einem Reaktor erfolgt, der eine Kombination eines Wirbelbettreaktors und eines Belebtschlammreaktors, wie oben ausführlich erläutert wurde, ist.

An die Nachreinigungsstufe schließt sich eine Nachklärung 12 an, die wiederum, wie die Zwischenklärung 6, in einem einfachen Absetzbecken erfolgen kann, oder aber auch, wenn der anfallende Biomasse nicht absetzfreudig ist, mit allen das Absetzen verbessernden und beschleunigenden Vorrichtungen und Zusatzmöglichkeiten ausgerüstet sein kann.

Schließlich gelangt das geklärte Abwasser zu einer Kontrolle 13, in der auf übliche Weise kontrolliert wird, ob das anfallende, gereinigte Abwasser die zulässigen Grenzwerte einhält oder nicht. Je nach den Vorschriften kann vorgesehen sein, daß in Abhängigkeit davon eine Verdünnung des Abwassers, ein Rückführen in das Pufferbecken 2 oder zur Vorreinigung 5 erfolgt oder auch, daß andere Maßnahmen ergriffen werden, das gereinigte und auf seinen Zustand kontrollierte Abwasser 15 wird in den Vorfluter abgelassen, wobei noch ein Pufferbecken vorgesehen werden kann, beispielsweise um immer genügend gereinigtes Abwasser für die Reinigung der Pellets des Denitrifikators im Rückspülbecken 14 vorrätig zu haben.

Der im Laufe des Verfahrens vom Abwasser abgetrennte (6,11) Schlamm kann in einem Sammelbecken gesammelt und bevorzugt landwirtschaftlich verwendet werden.

## Patentansprüche

1. Verfahren zur Behandlung und Reinigung industrieller Abwässer, insbesondere mit hoher Nitrat- und Sulfatkonzentration, bei denen die Denitrifizierung durch Inhibitoren verlangsamt oder unterbunden wird, umfassend eine aerobe Vorreinigungsstufe und eine Denitrifikationsstufe, **dadurch gekennzeichnet, daß** es zumindest die folgenden Schritte umfaßt:
a) die die Denitrifikation störenden Inhibitoren werden in der aeroben Vorreinigungsstufe (5) mikrobiell zerlegt und abgebaut, wobei in beliebiger Reihenfolge: der pH-Wert des Abwassers durch Zugabe basischer Reagenzien, darunter zumindest teilweise Ablauf (9) der Denitrifikationskolonne (8), gehoben wird, bevorzugt auf einen Wert zwischen 5,5 und 7 und die Temperatur des Zulaufes zur aeroben Vorreinigungsstufe auf einen für die aerobe Behandlung günstigen Wert, bevorzugt auf 20°C bis 30° C, gehoben wird;
b) die aerobe Vorreinigungsstufe (5) wird, bevorzugt in einem Reaktor, der eine Kombination eines Wirbelbettreaktors und eines Belebtschlammreaktors ist, unter Belüftung durchgeführt;
c) der Ablauf der aeroben Vorreinigungsstufe wird, bevorzugt in einer Tropfkörperkolonne (8), einer Denitrifikation unterzogen, wobei Kohlenstoff, bevorzugt in Form von Methanol, zugesetzt wird.

2. Verfahren nach Anspruch 1, **dadurch gekennzeichnet, daß** der bei der aeroben Vorbehandlung (5) gebildete organische Schlamm vor dem Einbringen des Ablaufes in die Denitrifikationskolonne (8), bevorzugt in einem Sedimentationsbecken (6), aus dem Abwasser entfernt wird.

3. Verfahren nach einem der vorstehenden Ansprüche, **dadurch gekennzeichnet, daß** an die Denitrifikation (8) eine weitere aerobe Behandlung (11) anschließt, um den Restkohlenstoffgehalt des denitrifizierten Abwassers (10) zu reduzieren.

4. Verfahren nach Anspruch 3, dadurch gekennzeichnte, daß, an die weitere aerobe Behandlung (11) anschließend, der bei der aeroben Behandlung gebildete organische Schlamm, bevorzugt in einem Sedimentationsbecken (12), aus dem Abwasser entfernt wird.

5. Verfahren nach Anspruch 4, **dadurch gekennzeichnet, daß**, anschließend an die Schlammentfernung (11), das Abwasser (15) durch ein rückspülbares Sandfilter geleitet wird.

6. Verfahren nach einem der vorstehenden Ansprüche, **dadurch gekennzeichnet, daß** der Denitrifikationsreaktor (8) ein Festbettreaktor mit Pellets als Bewuchskörpern ist und daß die Reinigung der Pellets außerhalb des Reaktors (8) erfolgt.

7. Verfahren nach Anspruch 7, **dadurch gekennzeichnet, daß** der jeweils zu reinigende Anteil der Pellets mittels Reinwasser (17) aus dem Reaktor (8) während dessen Betrieb abgezogen und in einen Rückspülbehälter (14) eingebracht und dort gereinigt wird.

8. Verfahren nach Anspruch 9, **dadurch gekennzeichnet, daß** die Reinigung der Pellets im Rückspülbehälter (14) mittels gereinigtem Abwasser (15) erfolgt und daß dieses Wasser und der von den Pellets gelöste Biorasen der Zwischenklärung (6) zugeführt wird.

9. Verfahren nach einem der Ansprüche 7 oder 8, **dadurch gekennzeichnet, daß** die gereinigten Pellets mittels Reinwasser (17) vom Rückspülbehlter (14) in den Reaktor (8) rückgespült werden.

10. Verfahren nach einem der vorstehenden Ansprüche, **dadurch gekennzeichnet, daß** der im Laufe des Verfahrens vom Abwasser abgetrennte (6, 11) Schlamm in einem Sammelbecken gesammelt und bevorzugt landwirtschaftlich verwendet wird.

## Claims

1. Process for treating and cleaning industrial waste water, particularly with high nitrate and sulphate concentration, in which the denitrification is slowed or suppressed by inhibitors, comprising an aerobic pre-cleaning stage and a denitrification stage, **characterised in that** it comprises at least the following steps:
a) the inhibitors disrupting the denitrification are microbially decomposed and broken down in the aerobic pre-cleaning stage (5), wherein in any desired sequence: the pH value of the waste water is raised by the addition of basic reagents, including at least partly outflow (9) from the denitrification column (8), preferably to a value between 5.5 and 7 and the temperature of the infeed to the aerobic pre-cleaning stage is raised to a value favourable for aerobic treatment, preferably to 20°C to 30°C;
b) the aerobic pre-cleaning stage (5) is carried out with aeration, preferably in a reactor which is a combination of a fluidised bed reactor and an activated sludge reactor;
c) the outflow of the aerobic pre-cleaning stage is subjected to a denitrification, preferably in a percolating body column (8), wherein carbon is added preferably in the form of methanol.

2. Process according to Claim 1, **characterised in that** the organic sludge formed in the aerobic pre-treatment (5) is removed from the waste water prior to the introduction of the outflow into the denitrification column (8), preferably in a sedimentation basin (6).

3. Process according to one of the preceding Claims, **characterised in that** following the denitrification (8), a further aerobic treatment (11) is appended in order to reduce the residual carbon content of the denitrified waste water (10).

4. Process according to Claim 3, **characterised in that** following on the further aerobic treatment (11), the organic sludge formed in the aerobic treatment is removed from the waste water, preferably in a sedimentation basin (12).

5. Process according to Claim 4, **characterised in that** following on the sludge removal (11), the waste water (15) is fed through a backwashable sand filter.

6. Process according to one of the preceding Claims, **characterised in that** the denitrification reactor (8) is a fixed bed reactor with pellets as fouling bodies and that the cleaning of the pellets takes place outside of the reactor (8).

7. Process according to Claim 6, **characterised in that** the respective proportion of the pellets to be cleaned by means of pure water (17) are withdrawn from the reactor (8) during its operation and introduced into a backwashing container (14) and cleaned there.

8. Process according to Claim 7, **characterised in that** the cleaning of the pellets in the rinsing container (14) takes place with cleaned waste water (15) and that this water and the bioresidues released from the pellets are fed to the intermediate clarification (6).

9. Process according to one of Claims 7 or 8, **characterised in that** the cleaned pellets are backwashed by means of pure water (17) from the backwash container (14) into the reactor (8).

10. Process according to one of the preceding Claims, **characterised in that** the sludge separated from the waste water in the course of the process (6, 11) is collected in a collection basin and preferably used agriculturally.

## Revendications

1. Procédé de traitement et de purification des eaux industrielles usées, en particulier présentant une concentration élevée en nitrates et en sulfates, dans lesquelles la dénitrification est ralentie ou arrêtée par des inhibiteurs, comportant une étape de pré-purification aérobie et une étape de dénitrification, **caractérisé en ce qu'**il comprend au minimum les étapes suivantes :
a) les inhibiteurs gênant la dénitrification sont décomposés et dégradés par action microbienne lors de l'étape de pré-purification aérobie (5), où, selon une séquence quelconque : la valeur de pH des eaux usées est augmentée par ajout de réactifs basiques, parmi lesquels au moins partiellement la charge en sortie (9) de la colonne de dénitrification (8), de préférence pour prendre une valeur comprise entre 5,5 et 7, et la température de la charge d'entrée vers l'étape de pré-purification aérobie est élevée pour prendre une valeur favorable au traitement aérobie, de préférence comprise entre 20 °C et 30 °C ;
b) l'étape de pré-purification aérobie (5) est réalisée par aération, de préférence dans un réacteur qui est une combinaison d'un réacteur à lit fluidisé et d'un réacteur à boue activée ;
c) la charge en sortie de l'étape de pré-purification aérobie est soumise, de préférence dans une colonne à lit percolateur (8), à une dénitrification, du carbone étant ajouté, de préférence sous la forme de méthanol.

2. Procédé selon la revendication 1, **caractérisé en ce que** la boue organique formée lors du pré-traitement aérobie (5) est éliminée des eaux usées avant introduction de la charge en sortie dans la colonne de dénitrification (8), de préférence dans un bassin de sédimentation (6).

3. Procédé selon l'une des revendications précédentes, **caractérisé en ce qu'**un autre traitement aérobie (11) suit la dénitrification (8), afin de réduire la teneur en carbone résiduel des eaux usées dénitrifiées (10).

4. Procédé selon la revendication 3, **caractérisé en ce que**, suite à l'autre traitement aérobie (11), la boue organique formée lors du traitement aérobie est séparée des eaux usées, de préférence dans un bassin de sédimentation (12).

5. Procédé selon la revendication 4, **caractérisé en ce que**, suite à l'élimination de la boue (11), les eaux usées (15) sont conduites par un filtre à sable avec lavage à contre-courant.

6. Procédé selon l'une des revendications précédentes, **caractérisé en ce que** le réacteur de dénitrification (8) est un réacteur à lit fixe possédant des pastilles en tant que corps de végétaux, et **en ce que** la purification des pastilles se fait en dehors du réacteur (8).

7. Procédé selon la revendication 6, **caractérisé en ce que** la fraction respective à purifier des pastilles est soutirée du réacteur (8) lors de son exploitation au moyen d'eau pure (17), et amenée dans un conteneur de rétrolavage (4) pour y être purifiée.

8. Procédé selon la revendication 7, **caractérisé en ce que** la purification des pastilles dans le conteneur de rétrolavage (14) se fait au moyen des eaux usées purifiées (15), et **en ce que** ces eaux et les biorésidus dissous par les pastilles alimentent la clarification intermédiaire (6).

9. Procédé selon l'une des revendications 7 ou 8, **caractérisé en ce que** les pastilles purifiées sont rétrolavées au moyen d'eau pure (17) du réacteur de rétrolavage (14) dans le réacteur (8).

10. Procédé selon l'une des revendications précédentes, **caractérisé en ce que** la boue séparée (6,11) des eaux usées au cours du procédé est collectée dans un bassin de collecte et utilisée de préférence en agriculture.
